# EUROPEAN PATENT SPECIFICATION

(11) **EP 3 827 960 B1**
(45) Date of publication and mention of the grant of the patent: **21.06.2023**
(21) Application number: 20210086.3
(22) Date of filing: 26.11.2020
(51) Int. Cl.: B29C 45/67

(54) **INJECTION MOLDING MACHINE**
SPRITZGIESSMASCHINE
MACHINE DE MOULAGE À INJECTION

(30) Priority: 29.11.2019 JP 2019217086
(43) Date of publication of application: 02.06.2021
(73) Proprietor: Sumitomo Heavy Industries, Ltd., Tokyo 141-6025 (JP)
(72) Inventor: MORIYA, Tomohiro, Chiba-shi, Chiba, 263-0001, (JP); TERADA, Shinji, Chiba-shi, Chiba, 263-0001, (JP); OGIWARA, Toshiki, Chiba-shi, Chiba, 263-0001, (JP); TSUNEMI, Koki, Chiba-shi, Chiba, 263-0001, (JP); MARUTA, Yosuke, Chiba-shi, Chiba, 263-0001, (JP); ASAI, Hiroaki, Chiba-shi, Chiba, 263-0001, (JP); NAMIKI, Takahiro, Chiba-shi, Chiba, 263-0001, (JP)
(74) Representative: Walcher, Armin

(56) References cited:
- EP-A1- 3 287 252
- EP-A2- 0 281 330
- WO-A1-2004/024417
- JP-A- S6 327 228
- JP-A- H02 179 709
- JP-A- 2006 192 573

## Description

### BACKGROUND OF THE INVENTION

### Field of the Invention

The present invention relates to an injection molding machine.

### Description of Related Art

For example, an injection molding machine which electrically drives an injection unit and hydraulically drives a mold clamping unit is known (refer to Japanese Patent No. 5921736) . European Patent Publication No. 3287252 A1 discloses an injection molding machine which can reduce an amount of a lubricant used to lubricate a drive shaft and a rotating member. European Patent Publication No. 0281330 A2 discloses that a device has a clamping cylinder which slidably fits a clamping ram whose front end is fixed on a movable board of injection molding machines. Japanese Patent Publication No. S63-027228 A discloses a mold clamping device for an injection compression molding machine suitable for molding a bidet auxiliary disk, a draw disk, a lens, and the like. Japanese Patent Publication No. H02-179709 A discloses a mold clamping device suitable for use in a molding machine such as an injection molding machine or a die cast machine. International Patent Publication No. WO 2004-024417 A1 discloses a mold clamping device in which a movable platen is opened and closed by a motor. Document JP 2006 192573 A discloses a hydraulic-pressure drive device of an electric-drive injection molding machine.

### SUMMARY OF THE INVENTION

However, in the above-mentioned injection molding machine, a process of opening and closing a mold is realized by a servomotor different from a hydraulic cylinder which realizes a mold clamping process. Therefore, there is a concern that a configuration is complicated.

Therefore, in view of the above problem, an object of the present invention is to provide a technique capable of realizing a simpler configuration in an injection molding machine.

In order to achieve the above object, according to one embodiment of the present disclosure, there is provided an injection molding machine including: an injection unit which is electrically driven; and a mold clamping unit which includes a stationary platen to which a stationary mold of a mold unit is attached and a movable platen to which a movable mold of the mold unit is attached and in which operations related to a mold closing process, a mold clamping process, and a mold opening process of the mold unit are hydraulically driven, in which the mold clamping unit includes a hydraulic cylinder which drives the movable platen in a direct pressure manner, a hydraulic pump which supplies hydraulic oil to the hydraulic cylinder, and an electric motor which drives the hydraulic pump, a hydraulic circuit which hydraulically drives the mold clamping unit is constituted by a closed circuit, and the hydraulic circuit includes the hydraulic pump, a hydraulic tank, stop valves, a prefill valve, and oil passages.

According to the above-described embodiment, it is possible to provide a technique capable of realizing a simpler configuration in an injection molding machine.

### BRIEF DESCRIPTION OF THE DRAWINGS

Fig. 1 is a view showing an example of an injection molding machine.
Fig. 2 is a view showing an example of an injection molding machine.
Fig. 3 is a view showing an example of a mold clamping unit.
Fig. 4 is a view showing an example of a mold clamping unit.
Fig. 5 is a view showing an example of a mold clamping unit.
Fig. 6 is a view showing an example of a mold clamping unit.
Figs. 7A and 7B are views showing a first example of disposition of a hydraulic pump and a servomotor.
Figs. 8A and 8B are views showing a second example of disposition of a hydraulic pump and a servomotor.
Figs. 9A and 9B are views showing a third example of disposition of a hydraulic pump and a servomotor.
Figs. 10A and 10B are views showing a fourth example of disposition of a hydraulic pump and a servomotor.

### DETAILED DESCRIPTION OF THE INVENTION

Hereinafter, an embodiment will be described with reference to the drawings.

### [Configuration of Injection Molding Machine]

### <Injection Molding Machine>

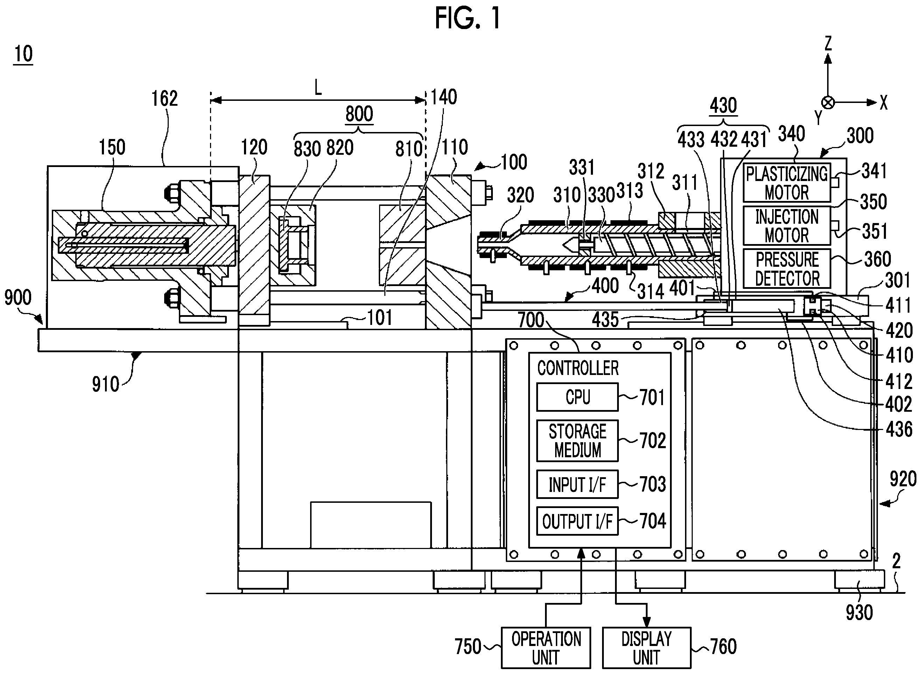

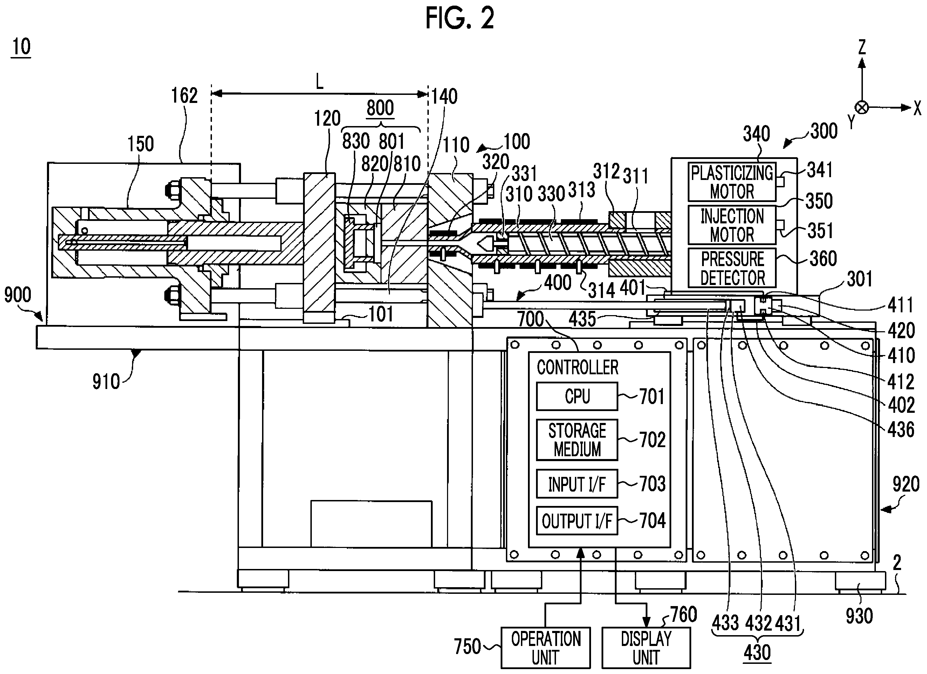

Fig. 1 is a view showing a state when mold opening of an injection molding machine according an embodiment is completed. Fig. 2 is a view showing a state when a mold of the injection molding machine according to the embodiment is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 10. A negative side in the Y-axis direction is referred to as an operation side, and a positive side in the Y-axis direction is referred to as a counter operation side.

As shown in Figs. 1 to 2, the injection molding machine 10 includes the mold clamping unit 100 which openings or closes a mold unit 800, an injection unit 300 which injects a molding material into the mold unit 800, a moving unit 400 which moves the injection unit 300 forward or rearward with respect to the mold unit 800, a controller 700 which controls each component of the injection molding machine 10, and a frame 900 which supports each component of the injection molding machine 10. Further, the injection molding machine 10 includes an ejector unit (not shown) which ejects a molding product molded by the mold unit 800 from the mold unit 800 (movable mold 820). The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 10 will be described.

### <Mold Clamping Unit>

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is open is defined as a rear side.

The mold clamping unit 100 performs mold closing, pressurization, mold clamping, depressurization, and mold opening of the mold unit 800. The mold unit 800 includes a stationary mold 810, the movable mold 820, and a movable member 830 which is disposed to be movable forward or rearward inside (hollow portion) of the movable mold 820.

For example, the mold clamping unit 100 is a horizontal type clamping unit and the mold opening and closing directions are the horizontal direction. The mold clamping unit 100 includes a stationary platen 110, a movable platen 120, a tie bar 140, a hydraulic cylinder 150, or the like.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

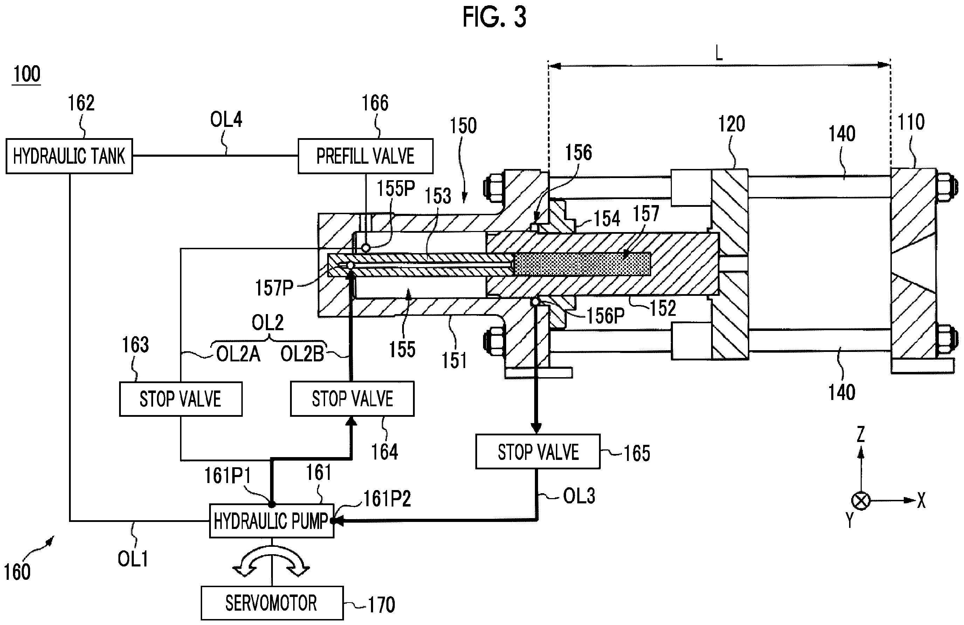

The tie bar 140 connects the stationary platen 110 and a cylinder body portion 151 (refer to Figs. 3 to 6) of the hydraulic cylinder 150 to each other at an interval L in the mold opening and closing directions. A plurality of (for example, four) tie bars 140 may be used. The plurality of tie bars 140 are disposed to be parallel in the mold opening and closing directions and extend according to a mold clamping force.

The hydraulic cylinder 150 is attached to the movable platen. The hydraulic cylinder 150 drives the movable platen 120 in a so-called direct pressure manner, and moves the movable platen 120 in the mold opening and closing directions. Details of a configuration of the hydraulic cylinder 150, a drive mechanism thereof, and an operation thereof will be described later (refer to Figs. 3 to 6).

The mold clamping unit 100 performs a mold closing process, a pressurization process, a mold clamping process, a depressurization process, a mold opening process, or the like under the control of the controller 700. A specific operation of the mold clamping unit 100 corresponding to these processes will be described later (refer to Figs. 3 to 6).

In the mold closing process, the hydraulic cylinder 150 is driven to move the hydraulic cylinder 150 (piston portion 152 described later) forward to a mold closing completion position at a set movement speed. Accordingly, the movable platen 120 moves forward and the movable mold 820 touches the stationary mold 810. For example, a position and a movement speed of the hydraulic cylinder 150 are detected by using a cylinder sensor or the like. The cylinder sensor detects expansion/contraction positions of the hydraulic cylinder 150 and sends a signal indicating a detection result to the controller 700. Accordingly, the controller 700 can perform a feedback-control (position control of the hydraulic cylinder 150) regarding the position of the hydraulic cylinder 150 (movable platen 120), based on the signal indicating the detection result of the cylinder sensor in the mold clamping process and the mold opening process described later.

In addition, a hydraulic cylinder position detector which detects the position of the hydraulic cylinder 150 and a hydraulic cylinder movement speed detector which detects the movement speed of the hydraulic cylinder 150 are not limited to the cylinder sensor, and a general detector can be used.

In the pressurization process, the hydraulic cylinder 150 is further driven to control the pressure of the hydraulic cylinder 150 to a predetermined pressure (hereinafter, "target mold clamping pressure"), increases the pressure of the hydraulic cylinder 150, and thus, generates a mold clamping force. For example, the pressure of the hydraulic cylinder 150 is detected by using a pressure sensor (cylinder pressure sensor) provided in the hydraulic cylinder 150. The cylinder pressure sensor detects a pressure (for example, a pressure in an oil chamber 155 described later) in a predetermined oil chamber inside the hydraulic cylinder 150, and sends a signal indicating a detection result to the controller 700. Accordingly, the controller 700 can perform a feedback-control (pressure control of the hydraulic cylinder 150) on the pressure of the hydraulic cylinder 150 based on the signal indicating the detection result of the cylinder pressure sensor in the pressurization process and the mold clamping process and the depressurization process described later.

In the mold clamping process, the hydraulic cylinder 150 is driven to maintain the pressure of the hydraulic cylinder 150 at the target mold clamping pressure. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the hydraulic cylinder 150 is driven to reduce the pressure of the hydraulic cylinder 150 from the target mold clamping pressure, and thus, the mold clamping force is reduced.

In the mold opening process, the hydraulic cylinder 150 is driven to move the hydraulic cylinder 150 (piston portion 152) rearward from a mold opening start position to a mold opening completion position at the set movement speed. Accordingly, the movable platen 120 moves rearward, and the movable mold 820 is separated from the stationary mold 810. Thereafter, the ejector unit ejects the molding product from the movable mold 820. The mold opening start position and the mold closing completion position may be the same as each other.

Setting conditions in the mold closing process, the pressurization process, and the mold clamping process are collectively set as a series of setting conditions. For example, the movement speed, the position (including mold closing start position, movement speed switching position, mold closing completion position, and mold clamping position), the pressure (including the target mold clamping pressure), the mold clamping force, and the like of the hydraulic cylinder 150 in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one or two of the mold clamping position, the target mold clamping pressure, and the mold clamping force may be set.

Setting conditions are similarly set in the depressurization process and the mold opening process. For example, the movement speed or the positions (mold opening start position, movement speed switching position, and mold opening completion position) of the hydraulic cylinder 150 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the hydraulic cylinder 150, a movement speed, positions, or the like of the movable platen 120 may be set. Moreover, instead of the position (for example, the mold clamping position) of the hydraulic cylinder 150 or the position of the movable platen 120, the target mold clamping pressure or the mold clamping force may be set.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

### <Ejector Unit>

Similarly to the descriptions of the mold clamping unit 100, in descriptions of the ejector unit, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit is attached to the movable platen 120 and moves forward or rearward together with the movable platen 120. The ejector unit includes an ejector rod which ejects the molding product from the mold unit 800, and a drive mechanism which moves the ejector rod in a movement direction (X-axis direction) of the movable platen 120.

The ejector rod comes into contact with the movable member 830 which is disposed to be movable forward or rearward inside the movable mold 820, and thus, the movable member can be moved forward.

For example, the drive mechanism includes an ejector motor and a motion conversion mechanism that converts a rotary motion of the ejector motor into a linear motion of the ejector rod. The motion conversion mechanism includes a screw shaft and a screw nut which is screwed to the screw shaft. A ball or a roller may be interposed between the screw shaft and the screw nut.

The ejector unit performs an ejection process under the control of the controller 700. In the ejection process, the ejector unit moves the movable member 830 forward to eject the molding product.

For example, a position or movement speed of the ejector rod is detected using an ejector motor encoder. The ejector motor encoder detects the rotation of the ejector motor and sends a signal indicating a detection result to the controller 700. In addition, an ejector rod position detector which detects the position of the ejector rod and an ejector rod movement speed detector which detects the movement speed of the ejector rod are not limited to the ejector motor encoder, and a general detector can be used.

### <Injection Unit>

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 touches the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and presses the mold unit 800. The heating unit 313 and the temperature measurer 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, when the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

As described above, in the present embodiment, the injection unit 300 is electrically driven by an electric actuator such as the plasticizing motor 340 and the injection motor 350. As a result, the injection unit 300 can be relatively more responsive than when hydraulically driven to a control command from the controller 700. Therefore, the injection molding machine 10 can realize relatively excellent controllability of the injection unit 300.

### <Moving Unit>

Similarly to the descriptions of the injection unit 300, in descriptions of the moving unit 400, the movement direction (for example, X-axis negative direction) of the screw 330 during filling is referred to as a front side, and the movement direction (X-axis positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servomotor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### <Controller>

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the molding closing process. Moreover, the ejection process may be performed the mold opening process. In a case where an on/off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 which receives input operations by a user and a display unit 760 which displays a display screen. For example, the operation unit 750 and the display unit 760 may include a touch panel to be integrated with each other. The touch panel as the display unit 760 displays the display screen under the control of the controller 700. For example, information such as setting of the injection molding machine 10 and a current state of the injection molding machine 10 may be displayed on the display screen of the touch panel. Further, for example, an input operation unit such as a button which receives an input operation by the user or an input field may be displayed on the display screen of the touch panel. The touch panel as the operation unit 750 detects the input operation on the display screen by the user and outputs a signal corresponding to the input operation to the controller 700. As a result, for example, the user operates the input operation unit provided on the display screen while checking the information displayed on the display screen, and thus, can set the injection molding machine 10 (including inputting the set value) or the like. Further, the user operates the input operation unit provided on the display screen, and thus, can operate the injection molding machine 10 corresponding to the input operation unit. Moreover, for example, the operation of the injection molding machine 10 may be an operation (including stopping) of the mold clamping unit 100, the ejector unit 200, the injection unit 300, the moving unit 400, or the like. Further, the operation of the injection molding machine 10 may be switching of the display screen displayed on the touch panel as the display unit 760.

In addition, although the operation unit 750 and the display unit 760 of the present embodiment are described as being integrated as a touch panel, the operation unit 750 and the display unit 760 may be provided independently. In addition, a plurality of the operation units 750 may be provided. The operation unit 750 and the display unit 760 are disposed on an operation side (Y-axis negative direction) of the mold clamping unit 100 (more specifically, the stationary platen 110).

### [Details of Mold Clamping Unit]

Next, in addition to Figs. 1 and 2, details of the mold clamping unit 100 will be described with reference to Figs. 3 to 6.

Figs. 3 to 6 are views showing an example of the mold clamping unit 100 according to the present embodiment. Specifically, Figs. 3 to 6 are views showing operating states of the mold clamping unit 100 in each of the mold closing process, the pressurization process, the mold clamping process, the depressurization process, and the mold opening process.

In addition, in Figs. 3 to 6, the mold unit 800 is not shown.

### <Structure of Mold Clamping Unit>

As shown in Figs. 3 to 6, the mold clamping unit 100 includes the stationary platen 110, the movable platen 120, the tie bar 140, the hydraulic cylinder 150, a hydraulic circuit 160, and a servomotor 170.

The hydraulic cylinder 150 includes the cylinder body portion 151, the piston portion 152, a rod portion 153, and a cylinder closing portion 154.

The cylinder body portion 151 is a stationary portion of the hydraulic cylinder 150. The cylinder body portion 151 is connected to the other end of the tie bar 140, one end of which is connected to the stationary platen 110. As a result, the cylinder body portion 151 is fixed at a constant distance (interval L) from the stationary platen 110. The cylinder body portion 151 includes with a hollow portion of which a front end portion (end portion in the X-axis negative direction) is opened.

One of the cylinder body portion 151 and the stationary platen 110 connected via the tie bar 140 is fixed to the mold clamping unit frame 910, and the other thereof is movably placed on the mold clamping unit frame 910. Accordingly, it is possible to allow the tie bar 140 to extend due to the generation of the mold clamping force.

One end of the piston portion 152 is inserted into an inside (hollow portion) of the cylinder body portion 151, and the other end thereof is fixed to the movable platen 120. Accordingly, the piston portion 152 can move in a front-rear direction (X direction) by action of a hydraulic oil supplied to and discharged from the cylinder body portion 151, and as a result, the movable platen 120 fixed to one end of the piston portion 152 can move in the front-rear direction (X direction) . Further, the piston portion 152 includes a hollow portion which open to the inside of the cylinder body portion 151.

One end of the rod portion 153 is fixed to a closed end portion (that is, end portion in X-axis negative direction) of the hollow portion of the cylinder body portion 151, and the other end thereof is inserted into the hollow portion of the piston portion 152. Accordingly, the rod portion 153 can move the piston portion 152 forward (in the X-axis positive direction) by the action of the hydraulic oil supplied to the hollow portion (oil chamber 157 described later) of the piston portion 152. Further, the rod portion 153 includes a hole portion extending in the axial direction from the other end side inserted into the hollow portion of the piston portion 152.

The cylinder closing portion 154 closes an open end portion of the cylinder body portion 151. The cylinder closing portion 154 includes a through-hole through which the piston portion 152 can penetrate and move forward or rearward.

Further, oil chambers 155 to 157 are provided inside the hydraulic cylinder 150.

The oil chamber 155 is partitioned by an inner wall of the cylinder body portion 151 and a distal end portion (one end portion) of the piston portion 152 in the closed end portion (end portion in the X-axis negative direction) of the hollow portion of the cylinder body portion 151. Therefore, the piston portion 152 can apply a mold clamping force to the movable platen 120 by the action of the hydraulic oil supplied to the oil chamber 155. The oil chamber 155 includes a port 155P through which the hydraulic oil is supplied and discharged.

The oil chamber 156 is partitioned by the inner wall of the cylinder body portion 151, an inner wall of the cylinder closing portion 154, and an intermediate portion of the piston portion 152 in the open end portion (end portion in the X-axis positive direction) of the cylinder body portion 151. Accordingly, the piston portion 152 can be moved rearward (that is, moved in the X-axis negative direction) by the action of the hydraulic oil supplied to the oil chamber 156. The oil chamber 156 includes a port 156P through which the hydraulic oil is supplied and discharged.

The oil chamber 157 is provided so as to be partitioned by the inner wall of the hollow portion of the piston portion 152 and the distal end portion of the rod portion 153. Therefore, the piston portion 152 can move forward (that is, move in the X-axis positive direction) by the action of the hydraulic oil supplied to the oil chamber 157. The oil chamber 157 communicates with the hole portion of the rod portion 153, and a port 157P for supplying and discharging hydraulic oil to and from the oil chamber 157 is provided in a distal end of the hole portion of the rod portion 153.

The hydraulic circuit 160 drives the hydraulic cylinder 150. The hydraulic circuit 160 includes a hydraulic pump 161, a hydraulic tank 162, stop valves 163 to 165, a prefill valve 166, and oil passages OL1 to OL4.

The hydraulic pump 161 supplies the hydraulic oil to the hydraulic cylinder 150 and discharges the hydraulic oil from the hydraulic cylinder 150. The hydraulic pump 161 is driven by a servomotor 170. The hydraulic pump 161 is configured so that the hydraulic oil can be discharged from one of ports 161P1 and 161P2 and the hydraulic oil can be sucked from the other thereof by switching a rotation direction of the servomotor 170. Further, the hydraulic pump 161 is connected to the hydraulic tank 162 through the oil passage OL1, and can replenish the hydraulic oil from the hydraulic tank 162 or discharge the hydraulic oil to the hydraulic tank 162.

The port 161P1 is connected to the ports 155P and 157P through the oil passage OL2. Specifically, the oil passage OL2 is branched into the oil passages OL2A and OL2B. The port 161P1 is connected to the port 155P, that is, the oil chamber 155 through the oil passage OL2A, and is connected to the port 157P, that is, the oil chamber 157 through the oil passage OL2B. Accordingly, the hydraulic pump 161 discharges the hydraulic oil from the port 161P1 to supply the hydraulic oil to at least one of the oil chamber 155 and the oil chamber 157.

The port 161P2 is connected to the port 156P, that is, the oil chamber 156 through an oil passage OL3. Accordingly, the hydraulic pump 161 discharges the hydraulic oil from the port 161P2 to supply the hydraulic oil to the oil chamber 156.

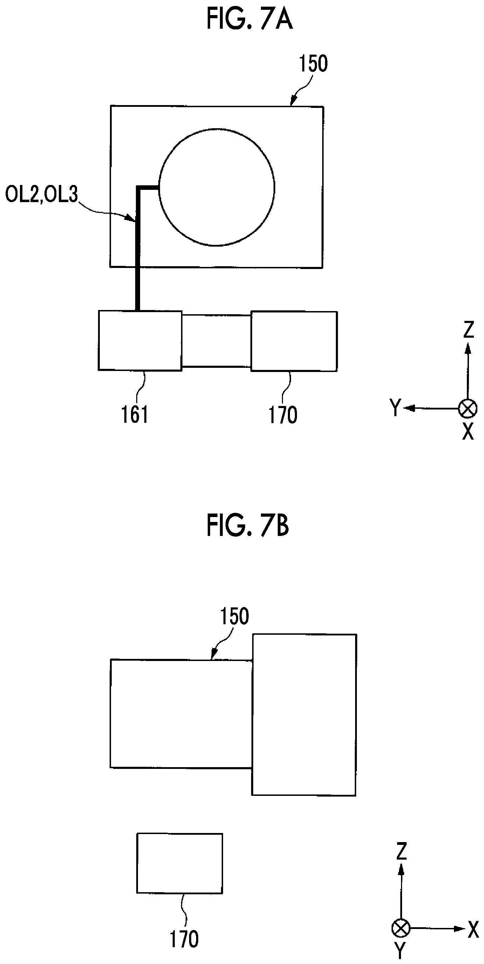

For example, the hydraulic pump 161 and the servomotor 170 may be housed in an integrated housing as an integrated drive unit (hereinafter, "pump unit") (refer to Figs. 7A to 10B). Accordingly, a disposition of the hydraulic pump 161 and the servomotor 170 can be integrated to reduce a size.

For example, the hydraulic pump 161 and the hydraulic tank 162 may be connected to each other by a steel pipe. That is, the oil passage OL1 may be realized by a steel pipe. Similarly, for example, the hydraulic pump 161 and the cylinder body portion 151 may be connected by a steel pipe. That is, the oil passages OL2 (oil passages OL2A, OL2B) and the oil passage OL3 may be realized by steel pipes. Accordingly, for example, as compared with a case where the oil passages OL1 to OL3 and the like are realized by a rubber pipe or the like, deterioration over time can be suppressed and a cycle of maintenance such as replacement or repair can be relatively lengthened.

When at least one of the oil passages OL1 to OL3 is realized by a steel pipe, the cylinder body portion 151 of the stationary platen 110 and the cylinder body portion 151 may be fixed to the mold clamping unit frame 910, and the stationary platen 110 may be placed to be movable on the mold clamping unit frame 910. This is because the stationary platen 110 moves on the mold clamping unit frame 910 and the extension of the tie bar 140 can be allowed due to the mold clamping force as described above. Further, this is because if the cylinder body portion 151 is moved, it is necessary to move the steel pipes corresponding to the oil passages OL1 to OL3 and a heavy object such as the hydraulic pump 161 (pump unit) connected by the steel pipes as a unit, and thus, there is a possibility that energy is wastefully consumed. Further, this is because it is possible to suppress a situation in which a load is accumulated in the steel pipe connecting the cylinder body portion 151 and the hydraulic pump 161 to each other due to the movement of the cylinder body portion 151, and a life of the steel pipe is shortened or damaged.

The hydraulic tank 162 (an example of a tank) stores the hydraulic oil. The hydraulic tank 162 is connected to the hydraulic pump 161 through the oil passage OL1. Further, the hydraulic tank 162 is connected to the port 155P, that is, the oil chamber 155 through the oil passage OL4 . As shown in Figs. 1 and 2, the hydraulic tank 162 is disposed adjacent to the hydraulic cylinder 150 in the width direction (Y-axis direction).

For example, the hydraulic tank 162 may be directly attached to the cylinder body portion 151 via the prefill valve 166. That is, the oil passage OL4 is disposed in a housing of the prefill valve 166 integrated with the hydraulic tank 162 and the cylinder body portion 151. Further, for example, the hydraulic tank 162 may be connected by a steel pipe. That is, the oil passage OL4 may be realized by a steel pipe. As a result, for example, as compared with a case where the oil passage OL4 is realized by a rubber pipe or the like, deterioration over time can be suppressed and the cycle of the maintenance such as replacement or repair can be relatively lengthened. Moreover, in the former case, the cylinder body portion 151, the hydraulic tank 162, and the prefill valve 166 can be integrated. Therefore, the hydraulic circuit 160 and the servomotor 170 can be miniaturized.

When the hydraulic tank 162 is directly attached to the cylinder body portion 151 via the prefill valve 166 or when the oil passage OL4 is realized by a steel pipe, as described above, the cylinder body portion 151 of the stationary platen 110 and the cylinder body portion 151 may be fixed to the mold clamping unit frame 910, and the stationary platen 110 may be placed to be movable on the mold clamping unit frame 910. As a result, the same actions and effects as described above are obtained.

The stop valve 163 is provided in the oil passage OL2A. The stop valve 163 performs switching between a communication state and a cutoff state of the oil passage OL2A under the control of the controller 700. Accordingly, for example, the stop valve 163 closes the oil passage OL2A, and thus, the hydraulic oil discharged from the port 161P1 of the hydraulic pump 161 can be supplied only to the oil chamber 157 through the oil passage OL2B.

The stop valve 164 is provided in the oil passage OL2B. The stop valve 164 performs switching between a communication state and a cutoff state of the oil passage OL2B under the control of the controller 700. Therefore, for example, the stop valve 164 closes the oil passages OL2B, and thus, the hydraulic oil discharged from the port 161P1 of the hydraulic pump 161 can be supplied only to the oil chamber 155 through the oil passage OL2A. Further, for example, the stop valve 164 closes the oil passage OL2B, and thus, the hydraulic oil in the oil chamber 157 is held.

The stop valve 165 is provided in the oil passage OL3. The stop valve 165 performs switching between a communication state and a cutoff state of the oil passage OL3 under the control of the controller 700. Accordingly, for example, the stop valve 165 closes the oil passage OL3, and thus, the hydraulic oil sucked from the port 161P1 into the hydraulic pump 161 can be discharged to the hydraulic tank 162 without being discharged from the port 161P2.

Hereinafter, the description will proceed on the premise that the stop valves 163 to 165 are normally opened (that is, the stop valves are normally open type valves) and are closed in response to a control command from the controller 700.

The prefill valve 166 is provided in the oil passage OL4. The prefill valve 166 is normally closed (that is, the prefill valve is a normally closed type valve) and is opened in response to a pilot pressure supplied from a pilot line (not shown) branching from the oil passage OL3.

The servomotor 170 is operated under the control of the controller 700. Therefore, the controller 700 can control the operation of the hydraulic pump 161 by controlling the servomotor 170.

The controller 700 controls the flow of the hydraulic oil in the hydraulic circuit 160 by controlling the hydraulic pump 161 (servomotor 170) and the stop valves 163 to 165, and realizes the mold closing process, the pressurization process, the mold clamping process, the depressurization process, and the mold opening process by the mold clamping unit 100.

As described above, in the present embodiment, the mold clamping unit 100 is hydraulically driven by the hydraulic cylinder 150. Specifically, the hydraulic cylinder 150 drives the movable platen 120 by a so-called direct pressure manner. Accordingly, the mold clamping unit 100 can have a shorter dimension in the X direction than in the case of the so-called toggle type unit. Therefore, a size of the injection molding machine 10 can be reduced.

Further, in the present embodiment, the hydraulic circuit 160 which hydraulically drives the mold clamping unit 100 (hydraulic cylinder 150) is constituted by a closed circuit.

When the hydraulic circuit 160 is an open circuit, the hydraulic circuit 160 needs to include a direction switching valve for switching the direction in which the hydraulic oil flows. Further, the hydraulic circuit 160 needs to include a hydraulic tank 162 having a relatively large capacity. This is because it is necessary to supply the entire hydraulic oil of the hydraulic circuit 160 from the hydraulic tank 162. Therefore, the size of the hydraulic circuit 160 is large, and there is a possibility that a component cannot be disposed only in a place near the hydraulic cylinder 150 to be driven. Therefore, for example, it may be necessary to dispose the hydraulic tank or the like in a space under the mold unit 800. As a result, it is impossible to dispose a transport unit or the like for receiving the molding product ejected from the mold unit 800 by the ejector unit and transporting the molding product to another place in the space under the mold unit 800, and thus, convenience of a user may be reduced.

Meanwhile, in the present embodiment, the hydraulic circuit 160 is configured as the closed circuit, and thus, the size of the hydraulic circuit 160 can be reduced and components thereof can be concentrated in a place adjacent to the hydraulic cylinder 150. Specifically, as described above, the hydraulic tank 162 can be disposed adjacent to the hydraulic cylinder 150 (refer to Figs. 1 and 2) . Further, as described later, the pump unit constituted by the hydraulic pump 161, the servomotor 170, or the like can be disposed adjacent to the hydraulic cylinder 150. Therefore, for example, it is not necessary to dispose the components of the hydraulic circuit 160 in the space under the mold unit 800, and the convenience of the user can be improved.

### <Operation of Mold Clamping Unit>

In the mold closing process, the controller 700 outputs a control command to the stop valve 163 to close the stop valve 163. As a result, the oil passage OL2A of the oil passages OL2A and OL2B is closed.

Further, the controller 700 outputs a control command to the servomotor 170 and operates the hydraulic pump 161 so as to discharge the hydraulic oil from the port 161P1. Accordingly, as shown in Fig. 3, the hydraulic pump 161 sucks the hydraulic oil from the oil passage OL3, discharges the hydraulic oil from the oil chamber 156, and discharges the hydraulic oil to the oil passage OL2B, and thus, the hydraulic oil can be supplied to the oil chamber 157 through the oil passage OL2B. Therefore, the hydraulic cylinder 150 extends and the piston portion 152 (movable platen 120) moves from the mold closing start position to the mold closing completion position in such a manner that the piston portion 152 protrudes forward from the hollow portion of the cylinder body portion 151.

In the pressurization process and the mold clamping process, the controller 700 outputs a control command to the stop valve 164 to close the stop valve 164. Accordingly, the oil passage OL2B of the oil passages OL2A and OL2B is closed, and the hydraulic oil in the oil chamber 157 is held.

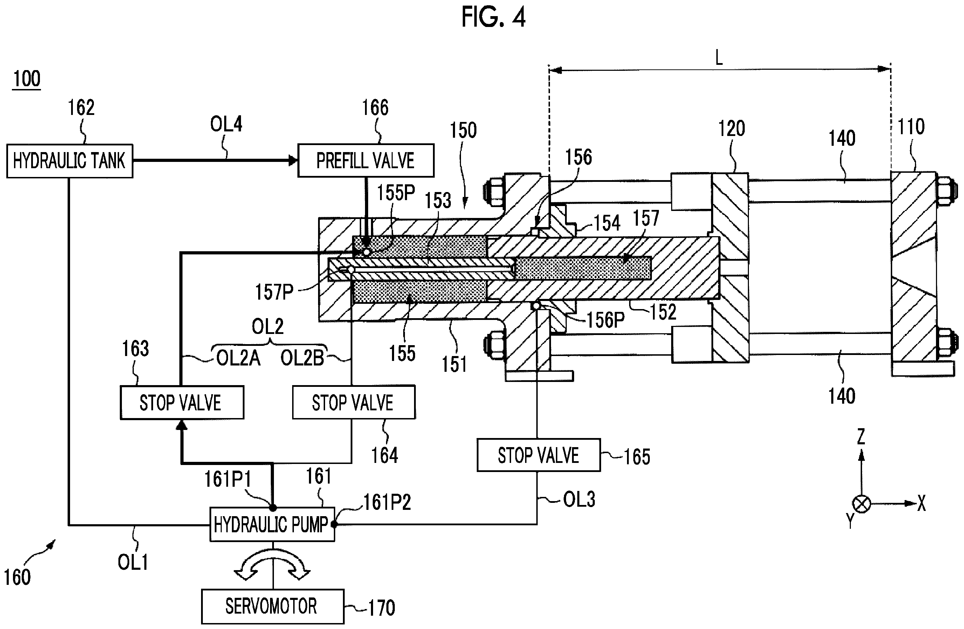

Further, the controller 700 outputs a control command to the servomotor 170 and operates the hydraulic pump 161 so as to discharge the hydraulic oil from the port 161P1. Accordingly, as shown in Fig. 4, the hydraulic pump 161 can discharge the hydraulic oil to the oil passage OL2A and supply the hydraulic oil to the oil chamber 155 through the oil passage OL2A.

Further, when the pressurization process starts, a predetermined pilot pressure acts on the prefill valve 166 from the above-mentioned pilot line by the action of the hydraulic oil flowing through the oil passage OL3 in the mold clamping process, and thus, the prefill valve 166 is opened. Further, when the pressurization process starts, the oil chamber 155 is in a negative pressure state. Therefore, as shown in Fig. 4, the hydraulic oil is supplied from the hydraulic tank 162 to the oil chamber 155 through the oil passage OL4.

Due to the action of the hydraulic oil supplied to the oil chamber 155, the piston portion 152 protrudes further forward from the hollow portion of the cylinder body portion 151, and the hydraulic cylinder 150 further extends. Therefore, the piston portion 152 (movable platen 120) further moves from the mold closing completion position to the mold clamping position to generate a mold clamping force and is maintained at the mold clamping position.

In the depressurization process, the controller 700 outputs a control command to the stop valves 164 and 165 to close the stop valves 164 and 165. Accordingly, the oil passage OL2B of the oil passages OL2A and OL2B is closed, and the hydraulic oil in the oil chamber 157 is held. Further, the oil passage OL3 is closed, and thus, the hydraulic oil does not flow into the oil chamber 156.

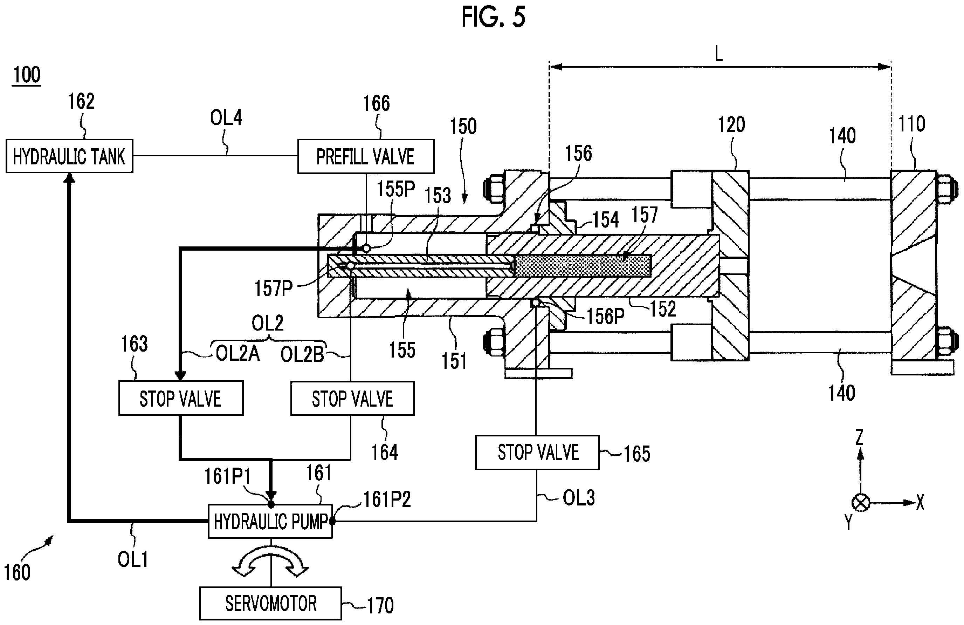

Further, the controller 700 outputs a control command to the servomotor 170 and operates the hydraulic pump 161 so as to suck the hydraulic oil from the port 161P1. Accordingly, as shown in Fig. 5, the hydraulic pump 161 sucks the hydraulic oil from the oil passage OL2A, discharges the hydraulic oil from the oil chamber 155, and discharges the hydraulic oil to the hydraulic tank 162 through the oil passage OL1. Therefore, the mold clamping force generated by the action of the hydraulic oil in the oil chamber 155 is gradually reduced, and the piston portion 152 (movable platen 120) returns from the mold clamping position to the mold opening start position (mold closing completion position).

In the mold opening process, the controller 700 outputs a control command to the stop valve 163 to close the stop valve 163. As a result, the oil passage OL2A of the oil passages OL2A and OL2B is closed.

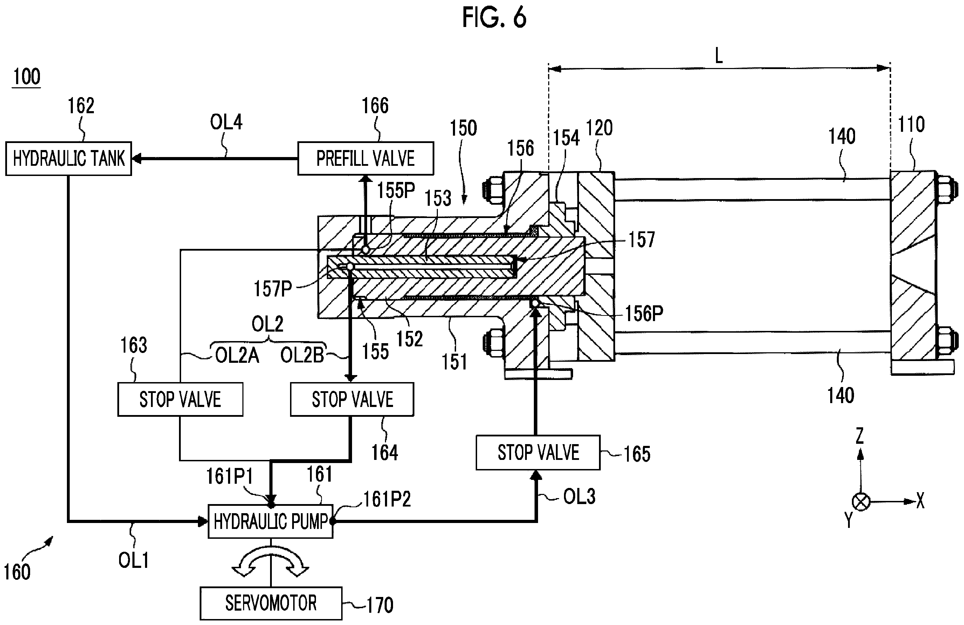

Further, the controller 700 outputs a control command to the hydraulic pump 161 and operates the hydraulic pump 161 so as to suck the hydraulic oil from the port 161P1 and discharge the hydraulic oil from the port 161P2. Accordingly, as shown in Fig. 6, the hydraulic pump 161 sucks the hydraulic oil from the oil passage OL2B, discharges the hydraulic oil from the oil chamber 157, discharges the hydraulic oil to the oil passage OL3, and supplies the hydraulic oil to the oil chamber 156. Further, the hydraulic pump 161 replenishes the hydraulic oil from the hydraulic tank 162 through the oil passage OL1. Therefore, the hydraulic cylinder 150 is contracted and the piston portion 152 (movable platen 120) moves from the mold opening start position to the mold opening completion position in such a manner that the piston portion 152 is inserted into the hollow portion of the cylinder body portion 151.

Further, due to the action of the hydraulic oil flowing through the oil passage OL3, a predetermined pilot pressure acts on the prefill valve 166 from the above-described pilot line, and the prefill valve 166 is opened. Therefore, as the hydraulic cylinder 150 is contracted, the hydraulic oil remaining in the oil chamber 155 is discharged to the hydraulic tank 162 through the oil passage OL4.

As described above, in the present embodiment, in the mold clamping unit 100, all operations related to the mold closing process, the pressurization process, the mold clamping process, the depressurization process, and the mold opening process are hydraulically driven by the hydraulic cylinder 150.

For example, when the operations related to the pressurization process, the mold clamping process, and the depressurization process are hydraulically driven and the operations related to the mold opening process and the mold closing process are electrically driven, there is a concern that the configuration of the mold clamping unit 100 may be complicated.

Meanwhile, in the present embodiment, in the mold clamping unit 100, the operations related to all the processes are hydraulically driven by the hydraulic cylinder 150, and thus, it is possible to simplify the components. Therefore, the size of the mold clamping unit 100 can be reduced.

### [Specific Example of Disposition of Hydraulic pump and Servomotor]

Next, a specific example of disposition of the hydraulic pump 161 and the servomotor 170 will be described with reference to Figs. 7A to 10B.

Figs. 7A to 10B are views showing first to fourth examples of the disposition of the hydraulic pump 161 and the servomotor 170, respectively. In the first to fourth examples, the hydraulic pump 161 and the servomotor 170 are housed in an integrated housing and are configured as an integrated drive unit (pump unit). A power transmission mechanism or the like which mechanically connects the hydraulic pump 161 and the servomotor 170 to each other is accommodated inside the housing between the hydraulic pump 161 and the servomotor 170.

As described above, since the hydraulic circuit 160 is constituted by a closed circuit, the components of the hydraulic circuit 160 are simplified and the size of the hydraulic circuit 160 is relatively reduced. Therefore, in the present embodiment, the hydraulic pump 161 which is a main component of the hydraulic circuit 160 and the servomotor 170 which drives the hydraulic pump 161 can be disposed adjacent to the hydraulic cylinder 150.

As shown in Figs. 7A and 7B, in the first example, the hydraulic pump 161 and the servomotor 170 are disposed adjacent to a lower side of the hydraulic cylinder 150 and disposed side by side in the width direction (Y-axis direction) of the injection molding machine 10. Specifically, the hydraulic pump 161 and the servomotor 170 are disposed downward from the hydraulic cylinder 150 at a relatively short interval.

In the hydraulic pump 161 and the servomotor 170, the hydraulic pump 161 is disposed on the Y-axis positive direction side and the servomotor 170 is disposed on the Y-axis negative direction side in the width direction (Y-axis direction) of the injection molding machine 10. The pump unit including the hydraulic pump 161 and the servomotor 170 is disposed so that a center in the alignment direction and a center in the width direction of the injection molding machine 10 substantially coincide with each other.

For example, the pump unit including the hydraulic pump 161 and the servomotor 170 may be fixed to the cylinder body portion 151 via the oil passages OL2 and OL3 configured as steel pipes, as described above. Further, the pump unit including the hydraulic pump 161 and the servomotor 170 may be fixed to the mold clamping unit frame 910.

The oil passages OL2 and OL3 through which the hydraulic oil flows are disposed between the hydraulic pump 161 and the hydraulic cylinder 150 so as to extend in the vertical direction (Z-axis direction).

The hydraulic pump 161 and the servomotor 170 may be disposed side by side in the mold opening and closing directions (X-axis direction) instead of being disposed side by side in the width direction of the injection molding machine 10. Further, the hydraulic pump 161 and the servomotor 170 may be disposed at a relatively short interval above the hydraulic cylinder 150. Further, an arrangement order of the hydraulic pump 161 and the servomotor 170 in the width direction may be reversed. That is, the arrangement order of the hydraulic pump 161 and the servomotor 170 in the width direction may be arbitrary, and the same may be applied to the case where the hydraulic pump 161 and the servomotor 170 are disposed in the mold opening and closing directions.

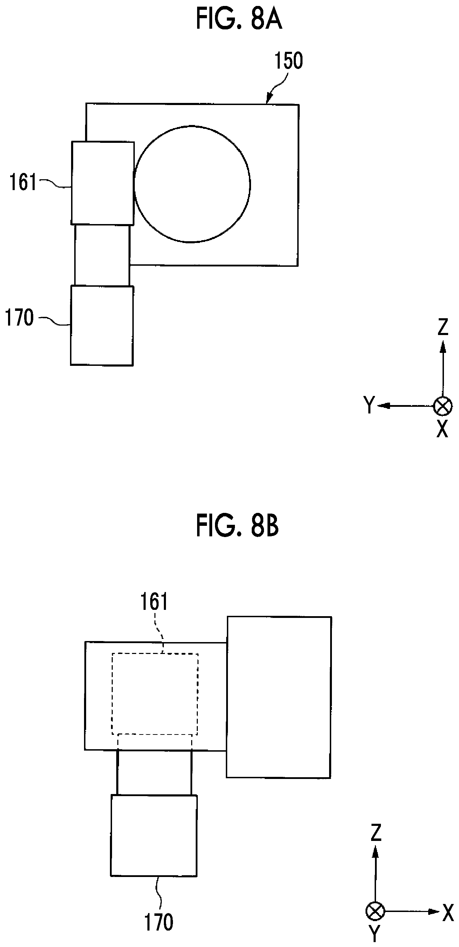

As shown in Figs. 8A and 8B, in the second example, the hydraulic pump 161 and the servomotor 170 are disposed adjacent to a side (Y-axis positive direction) of the hydraulic cylinder 150 and disposed side by side in the vertical direction (Z-axis direction) . Specifically, the housing of the hydraulic pump 161 is connected (that is, directly attached) to an outer peripheral surface of the housing of the hydraulic cylinder 150. Accordingly, it is not necessary to externally dispose the oil passages OL2 and OL3 between the hydraulic pump 161 and the hydraulic cylinder 150, and the size of the hydraulic circuit 160 can be further reduced.

In the hydraulic pump 161 and the servomotor 170, the hydraulic pump 161 is disposed on an upper side and the servomotor 170 is disposed on a lower side in the vertical direction. The pump unit including the hydraulic pump 161 and the servomotor 170 is disposed so that the center in the arrangement direction is offset downward from the center of the hydraulic cylinder 150 in the vertical direction.

The pump unit including the hydraulic pump 161 and the servomotor 170 is fixed to the housing of the hydraulic cylinder 150 at the housing portion of the hydraulic pump 161 corresponding to an upper end portion of the pump unit. Further, for example, the pump unit including the hydraulic pump 161 and the servomotor 170 may be further fixed to the mold clamping unit frame 910 directly or via a bracket or the like at the housing portion of the servomotor 170 corresponding to a lower end portion of the pump unit.

The hydraulic pump 161 and the servomotor 170 may be disposed adjacent to the hydraulic cylinder 150 in the Y-axis negative direction instead of being disposed adjacent to the hydraulic cylinder 150 in the Y-axis positive direction. Further, the hydraulic pump 161 and the servomotor 170 may be arranged in the mold opening and closing directions (X-axis direction), that is, along the axial direction of the hydraulic cylinder 150, instead of being disposed in the vertical direction. Further, the arrangement order of the hydraulic pump 161 and the servomotor 170 in the vertical direction may be reversed. That is, the arrangement order of the hydraulic pump 161 and the servomotor 170 in the vertical direction may be arbitrary, and the same may be applied to the case where the hydraulic pump 161 and the servomotor 170 are disposed in the mold opening and closing directions. Further, the hydraulic pump 161 and the servomotor 170 are disposed adjacent to the hydraulic cylinder 150 in the Y-axis positive direction or the Y-axis negative direction at a relatively short interval from the hydraulic cylinder 150, as in the case of the first example described above.

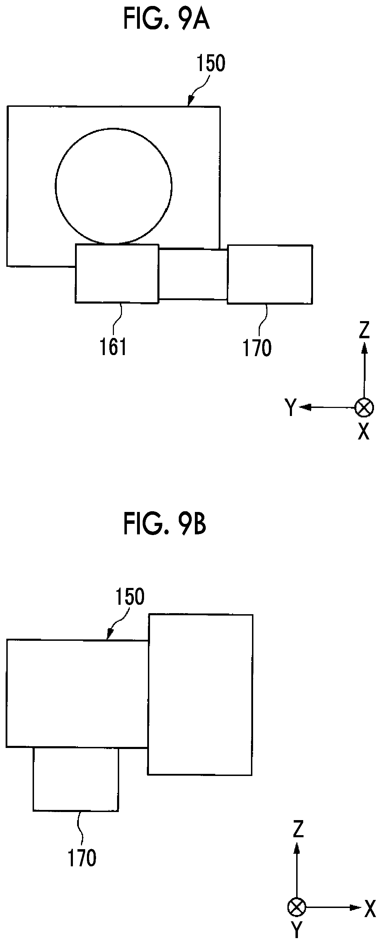

As shown in Figs. 9A and 9B, in the third example, the hydraulic pump 161 and the servomotor 170 are disposed adjacent to the lower side of the hydraulic cylinder 150 and disposed side by side in the width direction (Y-axis direction) of the injection molding machine 10. Specifically, as in the case of the second example, the housing of the hydraulic pump 161 is connected (that is, directly attached) to the outer peripheral surface of the housing of the hydraulic cylinder 150. Accordingly, the size of the hydraulic circuit 160 can be further reduced as in the case of the second example described above.

In the hydraulic pump 161 and the servomotor 170, the hydraulic pump 161 is disposed on the Y-axis positive direction side and the servomotor 170 is disposed on the Y-axis negative direction side in the width direction (Y-axis direction) of the injection molding machine 10. The pump unit including the hydraulic pump 161 and the servomotor 170 is disposed so that the center of the arrangement direction is offset from the center of the width direction of the injection molding machine 10 in the Y-axis negative direction.

The pump unit including the hydraulic pump 161 and the servomotor 170 may be fixed to the housing of the hydraulic cylinder 150 at the housing portion of the hydraulic pump 161. Further, for example, the pump unit including the hydraulic pump 161 and the servomotor 170 may be further fixed to the mold clamping unit frame 910 directly or via a bracket or the like.

The hydraulic pump 161 and the servomotor 170 may be disposed adjacent to the upper side of the hydraulic cylinder 150 instead of being disposed adjacent to the lower side of the hydraulic cylinder 150. Further, the arrangement order of the hydraulic pump 161 and the servomotor 170 in the width direction may be reversed. That is, the arrangement order of the hydraulic pump 161 and the servomotor 170 in the width direction may be arbitrary.

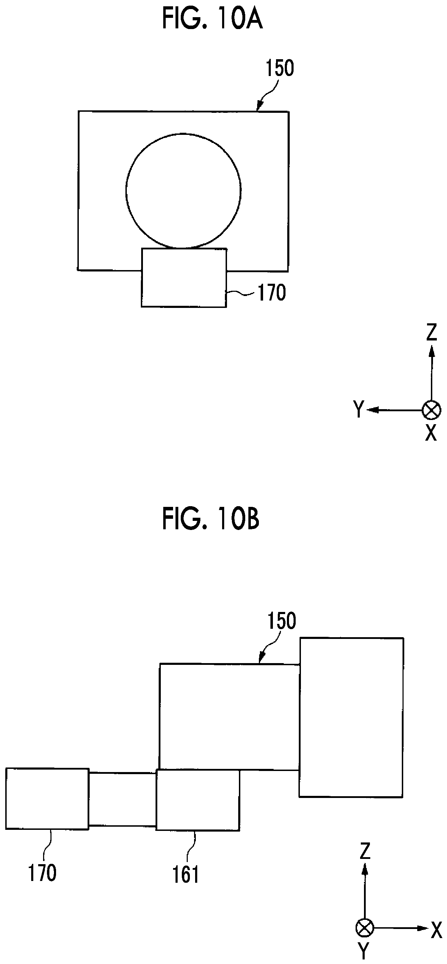

As shown in Figs. 10A and 10B, in the fourth example, the hydraulic pump 161 and the servomotor 170 are disposed adjacent to the lower side of the hydraulic cylinder 150 and disposed side by side in the mold opening and closing directions (X-axis direction) of the injection molding machine 10. Specifically, as in the case of the second example or the like, the housing of the hydraulic pump 161 is connected (that is, directly attached) to the outer peripheral surface of the housing of the hydraulic cylinder 150. As a result, the size of the hydraulic circuit 160 can be further reduced as in the case of the second example or the like described above.

In the hydraulic pump 161 and the servomotor 170, the hydraulic pump 161 is disposed on the mold closing direction (X-axis positive direction) side and the servomotor 170 is disposed on the mold opening direction (X-axis negative direction) side in the mold opening and closing directions (X-axis direction) of the injection molding machine 10. The pump unit including the hydraulic pump 161 and the servomotor 170 is disposed so as to protrude in the mold opening direction (X-axis negative direction) from a distal end portion of the hydraulic cylinder 150 in the mold opening and closing directions (X-axis direction) of the injection molding machine 10.

The pump unit including the hydraulic pump 161 and the servomotor 170 may be fixed to the housing of the hydraulic cylinder 150 at the housing portion of the hydraulic pump 161. Further, for example, the pump unit including the hydraulic pump 161 and the servomotor 170 may be further fixed to the mold clamping unit frame 910 directly or via a bracket or the like.

The hydraulic pump 161 and the servomotor 170 may be disposed adjacent to the upper side of the hydraulic cylinder 150 instead of being disposed adjacent to the lower side of the hydraulic cylinder 150. Further, the arrangement order of the hydraulic pump 161 and the servomotor 170 in the mold opening and closing directions may be reversed. That is, the arrangement order of the hydraulic pump 161 and the servomotor 170 in the mold opening and closing directions may be arbitrary.

As described above, by adopting the hydraulic circuit 160 constituted by the closed circuit, the components of the hydraulic circuit 160 are simplified, and large parts such as the hydraulic pump 161 and the servomotor 170 can be collected at a position close to the hydraulic cylinder 150.

Further, as shown in Figs. 7A to 10B, various dispositions can be adopted for the hydraulic pump 161 and the servomotor 170 within a range adjacent to the hydraulic cylinder 150. Therefore, in the injection molding machine 10, a degree of freedom in design, a degree of freedom in size, or the like can be improved.

### [Modification and Change]

Hereinbefore, the embodiments of the injection molding machine or the like is described. However, the present invention is not limited to the embodiments or the like, and various modifications and changes are possible within a scope of the present invention described in claims.

### Brief Description of the Reference Symbols

10: injection molding machine
100: mold clamping unit
110: stationary platen
120: movable platen
140: tie bar
150: hydraulic cylinder
151: cylinder body portion
152: piston portion
153: rod portion
154: cylinder closing portion
155 to 157: oil chamber
160: hydraulic circuit
161: hydraulic pump
162: hydraulic tank (tank)
163 to 165: stop valve
166: prefill valve
170: servomotor
300: injection unit
400: moving unit
700: controller
701: CPU
702: storage medium
703: input interface
704: output interface
750: operation unit
760: display unit

## Claims

1. An injection molding machine (10) comprising:
an injection unit (300) which is electrically driven; and
a mold clamping unit (100) which includes a stationary platen (110) to which a stationary mold (810) of a mold unit (800) is attached and a movable platen (120) to which a movable mold (820) of the mold unit (800) is attached and in which operations related to a mold closing process, a mold clamping process, and a mold opening process of the mold unit (800) are hydraulically driven,
**characterized in that**
the mold clamping unit (100) includes
a hydraulic cylinder (150) adapted to drive the movable platen (120) in a direct pressure manner,
a hydraulic pump (161) adapted to supply hydraulic oil to the hydraulic cylinder (150), and
an electric motor adapted to drive the hydraulic pump (161),
a hydraulic circuit (160) adapted to hydraulically drive the mold clamping unit (100) is constituted by a closed circuit, and
the hydraulic circuit (160) includes the hydraulic pump (161), a hydraulic tank (162), stop valves (163 to 165), aprefill valve (166), and oil passages (OL1 to OL4).

2. The injection molding machine (10) according to claim 1,
wherein the hydraulic pump (161) and the electric motor are disposed adjacent to the hydraulic cylinder (150).

3. The injection molding machine (10) according to claim 2,
wherein the hydraulic pump (161) and the electric motor are disposed adjacent to a side of the hydraulic cylinder (150) and disposed side by side in mold opening and closing directions or a vertical direction.

4. The injection molding machine (10) according to claim 2,
wherein the hydraulic pump (161) and the electric motor are disposed adjacent to an upper side or a lower side of the hydraulic cylinder (150) and disposed side by side in mold opening and closing directions or a width direction.

5. The injection molding machine (10) according to claim 3 or 4,
wherein housings of the hydraulic pump (161) and the hydraulic cylinder (150) are connected to each other.

6. The injection molding machine (10) according to any one of claims 1 to 5,
wherein the mold clamping unit (100) includes a tank (162) in which hydraulic oil is stored, and
the tank (162) is disposed adjacent to the hydraulic cylinder (150).

## Patentansprüche

1. Spritzgießmaschine (10), umfassend:
eine Einspritzeinheit (300), die elektrisch angetrieben wird; und
eine Formschließ-/klemmeinheit (100), die eine stationäre Platte (110), an der eine stationäre Form (810) einer Formeinheit (800) angebracht ist, und eine bewegliche Platte (120), an der eine bewegliche Form (820) der Formeinheit (800) angebracht ist, enthält, und in der Vorgänge, die sich auf einen Formschließprozess, einen Formklemmprozess und einen Formöffnungsprozess der Formeinheit (800) beziehen, hydraulisch angetrieben werden,
**dadurch gekennzeichnet, dass**
die Formschließ-/klemmeinheit (100) enthält
einen Hydraulikzylinder (150), der angepasst ist, die bewegliche Platte (120) mit direktem Druck anzutreiben,
eine Hydraulikpumpe (161), die angepasst ist, dem Hydraulikzylinder (150) Hydrauliköl zuzuführen, und
einen Elektromotor, der angepasst ist, die Hydraulikpumpe (161) anzutreiben,
wobei ein Hydraulikkreislauf (160), der angepasst ist, die Formschließ-/klemmeinheit (100) hydraulisch anzutreiben, durch einen geschlossenen Kreislauf gebildet wird, und
der Hydraulikkreislauf (160) die Hydraulikpumpe (161), einen Hydrauliktank (162), Stoppventile (163 bis 165), ein Vorfüllventil (166) und Ölkanäle (OL1 bis OL4) enthält.

2. Spritzgießmaschine (10) nach Anspruch 1,
wobei die Hydraulikpumpe (161) und der Elektromotor benachbart zu dem Hydraulikzylinder (150) angeordnet sind.

3. Spritzgießmaschine (10) nach Anspruch 2,
wobei die Hydraulikpumpe (161) und der Elektromotor benachbart zu einer Seite des Hydraulikzylinders (150) und nebeneinander in Formöffnungs- und -schließrichtung oder in einer vertikalen Richtung angeordnet sind.

4. Spritzgießmaschine (10) nach Anspruch 2,
wobei die Hydraulikpumpe (161) und der Elektromotor benachbart zu einer Oberseite oder einer Unterseite des Hydraulikzylinders (150) und nebeneinander in Formöffnungs- und -schließrichtung oder einer Breitenrichtung angeordnet sind.

5. Spritzgießmaschine (10) nach Anspruch 3 oder 4,
wobei Gehäuse der Hydraulikpumpe (161) und des Hydraulikzylinders (150) miteinander verbunden sind.

6. Spritzgießmaschine (10) nach einem der Ansprüche 1 bis 5,
wobei die Formschließ-/klemmeinheit (100) einen Tank (162) enthält, in dem Hydrauliköl gespeichert ist, und
der Tank (162) benachbart zu dem Hydraulikzylinder (150) angeordnet ist.

## Revendications

1. Une machine de moulage par injection (10) comprenant :
une unité d'injection (300) qui est entraînée électriquement ; et
une unité de verrouillage de moule (100) qui comprend un plateau stationnaire (110) sur lequel un moule stationnaire (810) d'une unité de moule (800) est fixé et un plateau mobile (120) sur lequel un moule mobile (820) de l'unité de moule (800) est fixé et dans laquelle des opérations en lien avec un processus de fermeture de moule, un processus de verrouillage de moule et un processus d'ouverture de moule de l'unité de moule (800) sont réalisées de manière hydraulique,
**caractérisée en ce que**
l'unité de verrouillage de moule (100) comprend
un vérin hydraulique (150) adapté pour entraîner le plateau mobile (120) en pression directe,
une pompe hydraulique (161) adaptée pour fournir de l'huile hydraulique au vérin hydraulique (150), et
un moteur électrique adapté pour entraîner la pompe hydraulique (161),
un circuit hydraulique (160) adapté pour entraîner de manière hydraulique l'unité de verrouillage de moule (100) est constitué d'un circuit fermé,
et
le circuit hydraulique (160) comprend la pompe hydraulique (161), un réservoir hydraulique (162), des vannes d'arrêt (163 à 165), une vanne de pré-remplissage (166) et des passages d'huile (OL1 à OL4).

2. La machine de moulage par injection (10) selon la revendication 1,
dans laquelle la pompe hydraulique (161) et le moteur électrique sont disposés de manière adjacente au vérin hydraulique (150).

3. La machine de moulage par injection (10) selon la revendication 2,
dans laquelle la pompe hydraulique (161) et le moteur électrique sont disposés de manière adjacente à un côté du vérin hydraulique (150) et sont disposés côte à côte dans les directions d'ouverture et de fermeture de moule ou une direction verticale.

4. La machine de moulage par injection (10) selon la revendication 2,
dans laquelle la pompe hydraulique (161) et le moteur électrique sont disposés de manière adjacente à un côté supérieur ou un côté inférieur du vérin hydraulique (150) et sont disposés côte à côte dans les directions d'ouverture et de fermeture de moule ou dans le sens de la largeur.

5. La machine de moulage par injection (10) selon la revendication 3 ou 4,
dans laquelle les carters de la pompe hydraulique (161) et du vérin hydraulique (150) sont reliés l'un à l'autre.

6. La machine de moulage par injection (10) selon l'une quelconque des revendications 1 à 5,
dans laquelle l'unité de verrouillage de moule (100) comprend un réservoir (162) dans lequel de l'huile hydraulique est stockée, et
le réservoir (162) est disposé de manière adjacente au vérin hydraulique (150).
